Europäisches Patentamt

European Patent Office

Office européen des brevets

(19)

(11) Veröffentlichungsnummer: **0 195 214**
**B1**

(12) **EUROPÄISCHE PATENTSCHRIFT**

(45) Veröffentlichungstag der Patentschrift:
**18.01.89**

(51) Int. Cl.⁴: **G 21 F 9/06**

(21) Anmeldenummer: **86101451.2**

(22) Anmeldetag: **05.02.86**

(54) **Verfahren zur mehrstufigen Aufbereitung radioaktiver Abwässer.**

(30) Priorität: **18.02.85 DE 3505578**

(43) Veröffentlichungstag der Anmeldung:
**24.09.86 Patentblatt 86/39**

(45) Bekanntmachung des Hinweises auf die Patenterteilung:
**18.01.89 Patentblatt 89/3**

(84) Benannte Vertragsstaaten:
**CH DE FR IT LI NL**

(56) Entgegenhaltungen:
**DE-A- 2 554 891**
**DE-A- 3 003 181**
**DE-C- 2 520 850**
**US-A- 4 442 028**

(73) Patentinhaber: **Siemens Aktiengesellschaft Berlin und München, Wittelsbacherplatz 2, D-8000 München 2 (DE)**

(72) Erfinder: **Queiser, Horst, Dipl.-Ing., Ahornweg 18, D-6454 Bruchköbel (DE)**
Erfinder: **Meichsner, Othmar, Dipl.-Ing., Ringstrasse 98, D-6096 Raunheim (DE)**

## Beschreibung

Die Erfindung betrifft ein Verfahren zur mehrstufigen Aufbereitung radioaktiver Abwässer mit einem Dekanter. Sie richtet sich auch auf solche Abwässer, die z.B. wegen eines schnellen Abklingens der Radioaktivität als nur zeitweilig radioaktiv angesehen werden können.

Eine mehrstufige Aufbereitung ist z.B. aus der DE-PS 2 520 850 bekannt. Dabei soll der Dekanter eine Vorentwässerung von Verdampferkonzentraten bewirken, damit eine zur weiteren Behandlung der Feststoffe nachgeschaltete Schneckenmaschine ein Produkt mit einer in engen Grenzen vorgegebenen Restfeuchte erhält. Die entwässerten Feststoffe werden dann in der Schneckenmaschine mit einem Verfestigungsmittel gemischt, wobei die Restfeuchte keine Rolle spielt. Der Flüssigkeitsaustrag des Dekanters wird in dem Verdampfer zurückgefördert, in dem die radioaktiven Abwässer in bekannter Weise konzentriert werden.

Die Erfindung geht von der Aufgabe aus, den bei der Aufbereitung radioaktiver Abwässer anfallenden Abfall, der gesichert beseitig werden muss, gegenüber dem Bekannten zu verringern. Dabei ist zu berücksichtigen, dass die weitere Behandlung des Verdampferkonzentrats in der DE-PS 2 520 850 insofern offen gelassen ist, als nicht dargelegt wird, was mit dem Verdampferkonzentrat geschieht. Eine vollständige Beseitigung der anfallenden Abwassermengen allein auf dem Wege der Verdampfung ist jedenfalls nicht vorstellbar. Somit sucht die Erfindung eine Möglichkeit, die überwiegend schwach radioaktiven und gleichzeitig schwer filtrierbaren, aber auch schwer verdampfbaren Abwässer aus kerntechnischen Anlagen günstiger als bisher aufzubereiten.

Erfindungsgemäss ist vorgesehen, dass in den Abwässern enthaltende Feststoffe mit dem Dekanter bis auf ≤ 10% Restfeuchte getrocknet und dann beseitigt werden, dass in dem Flüssigkeitsanteil verbliebene Feststoffe mit einem Separator bis in den kolloidalen Bereich hinein abgeschieden werden und dass mit dem Flüssigkeitsprodukt des Dekanters oder Separators anschliessend eine annähernd molekulare Filterung vorgenommen wird, die die Verwendung als Brauchwasser ermöglicht. Die Feststoffabscheidung kann auch mit einer Klärfilterzentrifuge erfolgen, wie später noch näher erläutert wird. Für die annähernd molekulare Filterung wird vorzugsweise eine Gegenosmose-Anlage eingesetzt.

Bei der Erfindung ist als wesentlicher Fortschritt die Bereitstellung grosser Mengen des zu behandelnden Abwassers als Brauchwasser zu sehen, die mit relativ geringem apparativem Aufwand gelingt. Der vor der Behandlung vorliegende Anteil an Feststoffen, insbesondere der organische Teil des Abfalls, der sich bei der Behandlung von Waschwassern usw. ergibt, kann darüber hinaus bei dem erfindungsgemässen Verfahren durch mikrobakteriellen Abbau in eine Form gebracht werden, die eine konzentrierte Einbindung in Zement oder eine ähnliche Verfestigung ermöglicht.

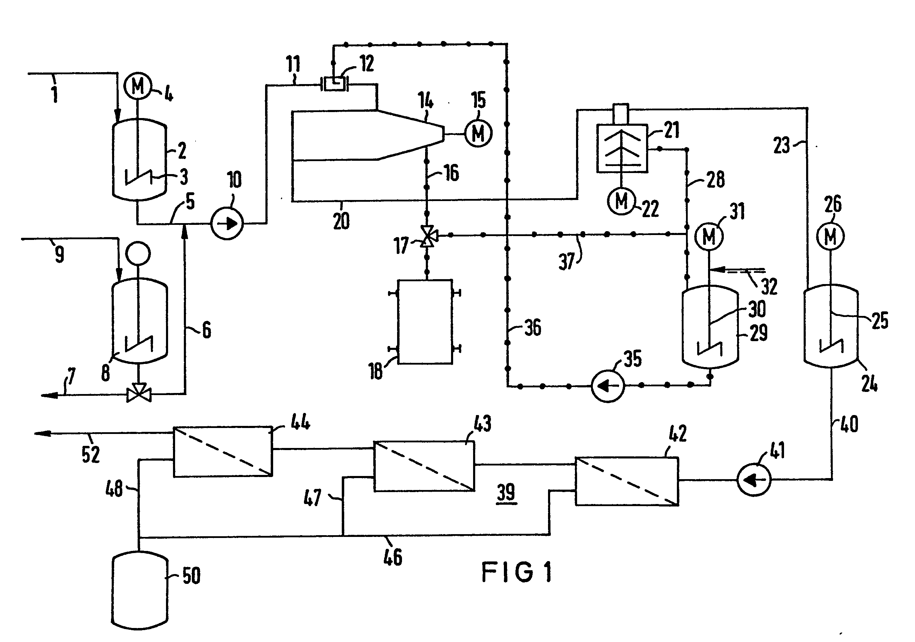

Weitere Einzelheiten der Erfindung sind in den Unteransprüchen definiert. Sie werden anhand der folgenden Beschreibung von drei Ausführungsbeispielen näher erläutert, die in den Fig. 1 bis 3 schematisch dargestellt sind.

Das erfindungsgemäss behandelte Abwasser stammt aus einem Kernkraftwerk mit einem Druckwasserreaktor, obwohl sich die Erfindung auch für Abwässer anderer Herkunft, z.B. aus einem Siedewasserreaktor, eignet. Das über die Leitung 1 zugeführte Rohwasser umfasst drei nach der hauptsächlichen Verschmutzung zu klassifizierende Abwässer:

Eine erste Teilmenge von bis 100 m³/Jahr enthält 70- bis 80prozentige Phosphorsäure, die insbesondere bei der Dekontamination von metallischen Komponenten des Kernkraftwerkes anfällt.

Eine zweite Teilmenge mit etwa 3000 bis 10 000 m³/Jahr ist vor allem detergentienhaltig, weil es sich um Waschwasser aus Wasch- und Reinigungseinrichtungen handelt. Ferner gehören dazu Sumpfwässer von betriebsmässig begehbaren Raumgruppen.

Eine dritte Abwassermenge mit 3000 bis 5000 m³/Jahr enthält gelöste und ungelöste Schwermetallverunreinigungen, die in einer Natriumsulfatlösung auftreten und zeitweise radioaktiv sein können. Dieser Abwassertyp ergibt sich vorwiegend bei Druckwasserreaktoren.

Die drei Anteile des Rohwassers werden getrennt in Abwassersammelbehälter 2 aufgefangen, von denen nur einer dargestellt ist. Er ist mit einem Rührer 3 mit einem elektrischen Antriebsmotor 4 versehen.

An die Auslassleitung 5 des Abwassersammelbehälters 2 ist die von einem Dreiwegeventil gesteuerte eine Leitung 6 angeschlossen, die zusammen mit einer Leitung 7 an den Auslass eines weiteren Sammelbehälters 8 angeschlossen ist. Der Behälter 8 kann über eine Leitung 9 mit Verdampferkonzentrat beladen werden, das z.B. aus der Aufbereitung von Kühlmittelleckagen des Druckwasserreaktors stammt. Die Leitung 7 führt zu einer Anlage zur endlagerungsfähigen Konditionierung flüssiger Abfälle.

Hinter dem Anschluss der Leitung 6 führt die Leitung 5 zu einer Zentrifugalspeisepumpe 10. Die Druckleitung 11 der Speisepumpe 10 ist über eine Impf- und Mischstrecke 12 mit einem Dekanter 14 verbunden, der von einem Elektromotor 15 angetrieben wird und die erste Stufe einer mehrstufigen Abwasserbehandlung bildet. Der hochtourige Dekanter 14 scheidet aus dem Abwasser suspendierte Feststoffe ab und liefert diese über eine Leitung 16 als Trockenstoff mit < 10% Restfeuchte, der über ein Dreiwegeventil 17 direkt in ein Abfallfass 18 abgegeben werden kann, das räumlich unterhalb des Dekanters 14 angeordnet ist.

Der mit dem Dekanter 14 abgeschiedene Flüssigkeitsanteil der Abwässer wird über eine Leitung 20 in einen Separator 21 eingespeist, der mit einem Elektromotor 22 angetrieben wird und eine Feststoffabscheidung bis in den kolloidalen Bereich ermöglicht. Aus dem Separator 21 wird das Zentrifugat über eine Leitung 23 in einen Behälter 24 abgelassen, in dem ein Rührwerk 25 mit einem Elektromotor 26 angeordnet ist.

Der im Separator 21 abgeschiedene Feststoffanteil gelangt über eine Leitung 28 in einen Schlammbehälter 29, der mit einem Rührer 30 mit Elektromotor 31 versehen ist. In den Schlammbehälter 29 kann über eine in das Rührwerk 30 führende Leitung 32 Luft eingeblasen werden, so dass der Schlammbehälter zum Ausflocken im Sinne eines biologischen aeroben Abbaues organischer Substanzen mit Flokkenvergrösserung verwendet werden kann. Nach dem aeroben Abbau kann dabei anfallender Dünnschlamm über eine spezielle Pumpe 35 mit einer Leitung 36 zu der Impf- und Mischstrecke 12 zurückgeführt werden, so dass es in den Dekanter 14 gelangt. Die getrockneten Feststoffe können dagegen über das Dreiwegeventil 17, das über eine Leitung 37 mit dem Separator 21 bzw. dem Schlammbehälter zu Spülzwecken verbunden ist, in den Abfallbehälter 18 eingespeist werden.

Das im Zentrifugatbehälter 24 gespeicherte, zweistufig gereinigte Abwasser wird über eine Leitung 40 mit einer Hochdruckpumpe 41 in eine dreistufige Gegenosmoseanlage 39 (reverse osmosis) eingespeist. Die Gegenosmoseanlage 39, die für eine mindestens annähernd molekulare Filterung sorgt, umfasst in der ersten Stufe 42 4 × n Module, in der zweiten Stufe 43 2 × n Module und in der dritten Stufe 44 n Module. Dabei hängt die Zahl n der gleich ausgebildeten Module von dem gewünschten Durchsatz und der Ausbildung der Module ab.

Aus der Gegenosmoseanlage 39 wird das Reinwasser, das etwa 90% des Abwassers aus dem Zentrifugatbehälter umfasst und eine Reinheit von weniger als 1% TOC (Total organic content) hat, über Leitungszweige 46, 47 und 48 in einen Permanentbehälter 50 abgegeben, aus dem das Wasser als Brauchwasser für den Kernkraftwerksbetrieb zur Wiederverwendung entnommen wird. Das Brauchwasser kann z.B. in der Wäscherei zur Dekontamination, aber auch für Spülungs- und Reinigungszwecke verwendet werden. Durch eine weitere Behandlung, z.B. eine keimtötende Chlorierung, ist es gewünschtenfalls möglich, für das Permeat eine Trinkwasserqualität entsprechend den Hygienevorschriften zu erreichen, so dass das Wasser auch für Duschen usw. eingesetzt werden kann.

Die belasteten Bestandteile des Zentrifugats aus dem Behälter 24 werden aus der dritten Stufe 44 der Gegenosmoseanlage 39 über die Leitung 52 in das Kernkraftwerk zurückgeführt, z.B. zu einer Eindampfanlage, aus der das Konzentrat dann über die Leitung 9 an den Konzentratbehälter 8 zurückgeführt wird.

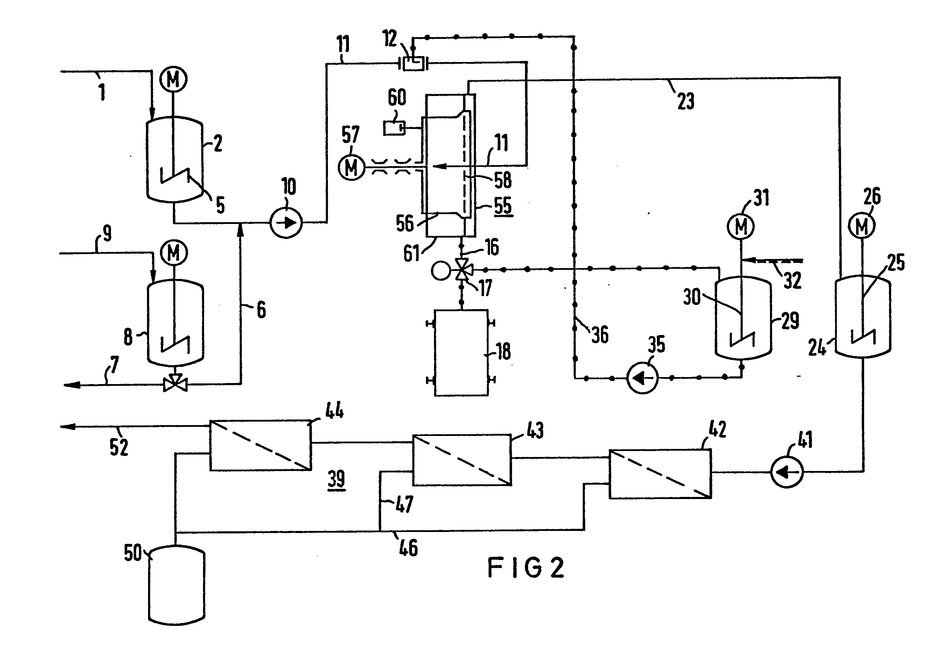

Bei dem Ausführungsbeispiel nach Fig. 2 sind der Dekanter 14 und der Separator 21 des Ausführungsbeispiels nach Fig. 1 in Form einer Klärfilterzentrifuge 55 zusammengefasst. Die Klärfilterzentrifuge 55 umfasst eine fliegend gelagerte Zentrifugentrommel 56, die von einem Elektromotor 57 angetrieben wird und eine Filtermembran 58, z.B. Filtertuch, enthält, durch das das mit der Leitung 11 in der Trommelachse eingespeiste Abwasser durch die Fliehkraft hindurchgeführt wird. Die je nach der Weiterverarbeitung gewünschte Restfeuchte von 10 bis 50% der vom Filter 58 zurückgehaltenen Trockenmasse wird durch eine dem Trommeldurchmesser angepasste Drehzahl erreicht. Der Reinigungsgrad wird durch die Ausbildung der Filtermembran 58 bestimmt. Er kann deshalb über den Reinigungsgrad des Separators nach Fig. 1 angehoben werden.

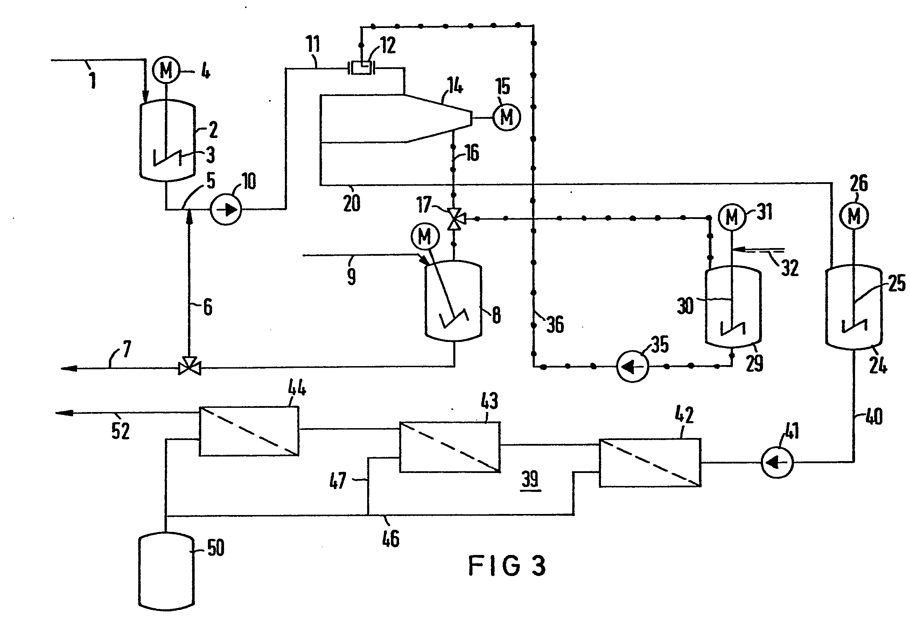

Das Trockengut wird aus der Klärfilterzentrifuge 55 dadurch abgelassen, dass der Mantel der Trommel 56 über einen Druckmittelantrieb 60 in Achsrichtung verschoben wird. Der Trockenstoff tritt dann in das Zentrifugengehäuse 61 über, aus dem er über die Leitung 16 mit dem Ventil 17 in den Abfallbehälter 18 gelangt, wie dies auch bei dem Ausführungsbeispiel nach Fig. 1 der Fall war. Der Trockenstoff kann aber auch, wie anschliessend anhand der Fig. 3 beschrieben wird, dem Verdampferkonzentrat im Konzentratbehälter 8 zugemischt werden.

Die weitere Behandlung des Trockenstoffs und der Flüssigkeitsanteil stimmt mit der nach Fig. 1 geschilderten Behandlungsweise überein, denn die mit der Leitung 23 abgeführten Flüssigkeitsanteile, aus denen bereits Feststoffe bis in den kolloidalen Bereich abgeschieden sind, werden mit der Gegenosmoseanlage 39 bis in den molekularen Bereich hinein bis auf höchstens 1% TOC gereinigt, so dass sie als Brauchwasser recycliert werden können.

Beim Ausführungsbeispiel nach Fig. 3 wird der Feststoffaustrag des Dekanters 14 über die Leitung 16 mit dem Ventil 17 in den Konzentratbehälter 8 abgelassen. Aus diesem gelangen die Feststoffe zusammen mit dem über die Leitung 9 zugeführten Verdampferkonzentrat über die Leitung 7 zur Flüssigabfallverarbeitung. Der Flüssigkeitsanteil des Dekanters 14 wird bis auf Brauchwasserqualität in den folgenden, mit Fig. 1 und 2 gleichen Stufen (< 1% TOC) gereinigt und recycliert.

Durch die Anordnung des Dekanters 14 oberhalb des Verdampferkonzentratbehälters 8 und die dadurch bedingte Anreicherung des Verdampferkonzentrats durch feuchte Feststoffe aus dem Dekanter wird eine Reduktion des Festabfalls aus Abwasserkonzentraten um ca. 35% erreicht.

Mit der beschriebenen Anlagenkonzeption ist es möglich, in separaten Reinigungskampagnen auch das Verdampferkonzentrat so zu separieren, dass die üblicherweise aktivitätstragenden suspendierten Feststoffe und Grossmoleküle gelöster Stoffe zurückgehalten werden, während die übrigen Lösungen (Permeat) abgegeben werden können. Dies ist dann möglich, wenn z.B. die Kernkraftwerksanlage ohne Brennelementschäden betrieben wird, und eine Abklingzeit für einige gelöst vorliegende kurzlebige Isotope von ca. 1 Jahr eingehalten werden kann. In diesem Fall kann mit einer Reduzierung des Abwasserkonzentrats und damit der Abfallmenge auf mindestens 50% des Ursprungswertes gerechnet werden. In einigen Fällen, z.B. bei Regeneraten von Mischbettfilteranlagen, gelingt eine Reduzierung bis auf 20%.

Durch die spezielle Kombination des erfindungsgemässen Verfahrens wird es möglich, eine Reduzierung der Abwassermenge z.B. beim Druckwasserreaktor von jetzt ca. 10 000 m³/a auf ca. 680 m³/a zu bewirken. Die ohne Tritium abgegebene Aktivitätsmenge kann etwa um ein ähnliches Verhältnis gesenkt werden, wenn das Konzentrat aus der Osmose-Anlage verdampft wird.

Die Feststoffe können in unterschiedlicher Form für das Endlager konditioniert werden, z.B. werden sie mit Zement verfestigt. Besteht in der kerntechnischen Anlage die Möglichkeit, die Abfälle auch in Pulverform zu lagern, zu verfestigen oder verfestigen zu lassen, so kann entweder eine Kombination von einem Dekanter und einem nachgeschalteten Separator oder einer Klärfilterzentrifuge mit Trocknungsvorrichtung eingesetzt werden. Der im Abwasser suspendierte Feststoff wird dabei im Form von trockenem, nicht gär- und faulfähigem Pulver ausgetragen und in Fässer abgefüllt.

Die Erfindung kann auch vorteilhaft zur separaten Reinigung von Dekontaminationslösungen auf der Basis konzentrierter Phosphorsäure (Elektropolieren) eingesetzt werden. Dabei bewirkt die als Endstufe eingesetzte Reverse-Osmose-Anlage 39 eine Abtrennung gelöster Schwermetallsalze und sonstiger Verunreinigungen aus der konzentrierten Phosphorsäure. Die konzentrierte Säure kann so für den Dekontaminationsprozess zurückgewonnen werden (Recylcling). Sie ist im Sinne der Erfindung als Brauchwasser anzusehen. In diesem speziellen Fall der Reinigung von Abfallphosphorsäure wird durch die Aufbereitung und Wiederverwendung der Säure 90-95% des Abfalles eingespart.

## Patentansprüche

1. Verfahren zur mehrstufigen Aufbereitung radioaktiver Abwässer mit einem Dekanter, dadurch gekennzeichnet, dass in den Abwässern enthaltene Feststoffe mit dem Dekanter bis auf 10% Restfeuchte getrocknet und dann beseitigt werden, die in dem Flüssigkeitsanteil verbliebene Feststoffe mit einem Separator bis in den kolloidalen Bereich hinein abgeschieden werden und dass mit dem Flüssigkeitsprodukt des Dekanters anschliessend eine annähernd molekulare Filterung vorgenommen wird, die die Verwendung als Brauchwasser ermöglicht.

2. Verfahren nach Anspruch 1, dadurch gekennzeichnet, dass eine Wasserreinheit von < 1% TOC erreicht wird.

3. Verfahren nach Anspruch 1 oder 2, dadurch gekennzeichnet, dass der Austrag des Dekanters in ein Endlagerfass gefüllt wird.

4. Verfahren nach Anspruch 1, 2 oder 3, dadurch gekennzeichnet, dass in dem Dekanter eine zusätzliche Trocknung durch Warmluft vorgenommen wird.

5. Verfahren nach Anspruch 4, dadurch gekennzeichnet, dass Kühlluft eines elektrischen Antriebsmotors des Dekanters als Warmluft verwendet wird.

6. Verfahren nach einem der Ansprüche 1 bis 5, dadurch gekennzeichnet, dass organische Inhaltsstoffe der Abwässer in einem Schlammbehälter biologisch abgebaut werden, wobei durch Luftzugabe ein Flockenwachstum eingeleitet wird, das die Abscheidung der Flocken im Dekanter ermöglicht.

7. Verfahren nach einem der Ansprüche 1 bis 6, dadurch gekennzeichnet, dass eine Dekanter-Separator-Kombination in Form einer Klärfilterzentrifuge eingesetzt wird.

8. Verfahren nach einem der Ansprüche 1 bis 7, dadurch gekennzeichnet, dass die annähernd molekulare Filterung mit einer Ultrafiltereinheit erfolgt.

9. Verfahren nach einem der Ansprüche 1 bis 7, dadurch gekennzeichnet, dass die annähernd molekulare Filterung mit einer Gegenosmoseanlage erfolgt.

10. Verfahren nach Anspruch 9, dadurch gekennzeichnet, dass das Konzentrat der Gegenosmoseanlage verdampft wird.

11. Verfahren nach einem der Ansprüche 1 bis 10, dadurch gekennzeichnet, dass der Dekanterrückstand mit Hilfe der Schwerkraft unmittelbar in einen Verdampferkonzentratbehälter übergeleitet wird.

12. Verwendung des Verfahrens nach einem der Ansprüche 1 bis 11 zur Behandlung der Phosphorsäure von Elektropolierbädern.

## Claims

1. Method for the multistage treatment of radioactive waste water with a decanter, characterised in that solids contained in the waste water are dried with the decanter to 10% residual moisture and are then removed, in that solids remaining in the fluid part are separated with a separator as far as into the colloidal range and in that there is subsequently effected with the fluid product of the decanter a substantially molecular filtration which renders possible use as process water.

2. Method according to claim 1, characterised in that a water purity of < 1% TOC is achieved.

3. Method according to claim 1 or 2, characterised in that the discharge of the decanter is fed into a final storage cask.

4. Method according to claim 1, 2 or 3, characterised in that additional drying through warm air is effected in the decanter.

5. Method according to claim 4, characterised in that cooling air of an electric driving motor of the decanter is used as warm air.

6. Method according to one of the claims 1 to 5, characterised in that organic components of the waste water are biologically decomposed in a sludge container, there being initiated through addition of air a flake growth, which renders possible separation of the flakes in the decanter.

7. Method according to one of the claims 1 to 6, characterised in that a decanter-separator-combination in the form of a sewerage filter centrifuge is used.

8. Method according to one of the claims 1 to 7, characterised in that the substantially molecular filtration takes place with an ultrafilter unit.

9. Method according to one of the claims 1 to 7, characterised in that the substantially molecular filtration takes place with a reverse osmosis installation.

10. Method according to claim 9, characterised in that the concentrate of the reverse osmosis installation is evaporated.

11. Method according to one of the claims 1 to 10, characterised in that the decanter residue is passed over directly into an evaporator concentrate container with the aid of the force of gravity.

12. Use of the method according to one of the claims 1 to 11 for the treatment of the phosphoric acid of electro-polishing baths.

**Revendications**

1. Procédé de traitement à stades multiples des eaux résiduaires radioactives avec une décanteuse, caractérisé en ce qu'il consiste à essorer les matières solides contenues dans les eaux résiduaires avec la décanteuse, jusqu'à une humidité résiduelle de 10%, puis à les éliminer, à séparer les matières solides restant dans la partie de liquide avec un séparateur jusqu'au domaine colloïdal, et à effecteur ensuite, avec le produit liquide de la décanteuse, une filtration sensiblement moléculaire, qui permet une utilisation comme eau industrielle.

2. Procédé suivant la revendication 1, caractérisé en ce qu'une pureté de l'eau inférieure à une teneur totale en matière organique de 1% est atteinte.

3. Procédé suivant la revendication 1 ou 2, caractérisé en ce qu'il consiste à charger ce qui sort de la décanteuse dans un fût de stockage définitif.

4. Procédé suivant la revendication 1, 2 ou 3, caractérisé en ce qu'il consiste à effectuer dans la décanteuse un séchage supplémentaire par de l'air chaud.

5. Procédé suivant la revendication 4, caractérisé en ce qu'il consiste à utiliser de l'air de refroidissement d'un moteur électrique d'entraînement de la décanteuse comme air chaud.

6. Procédé suivant l'une des revendications 1 à 5, caractérisé en ce qu'il consiste à décomposer biologiquement les matières organiques contenues dans les eaux résiduaires dans une cuve à boue en effectuant, par admission d'air, une croissance de flocons permettant le dépôt des flocons dans la décanteuse.

7. Procédé suivant l'une des revendications 1 à 6, caractérisé en ce qu'il consiste à mettre en oeuvre une association d'une décanteuse et d'un séparateur, sous la forme d'une centrifugeuse à filtre de clarification.

8. Procédé suivant l'une des revendications 1 à 7, caractérisé en ce qu'il consiste à effectuer la filtration sensiblement moléculaire par une unité d'ultrafiltration.

9. Procédé suivant l'une des revendications 1 à 7, caractérisé en ce qu'il consiste à effectuer la filtration sensiblement moléculaire par une installation d'osmose inverse.

10. Procédé suivant la revendication 9, caractérisé en ce qu'il consiste à évaporer le produit concentré de l'installation d'osmose inverse.

11. Procédé suivant l'une des revendications 1 à 10, caractérisé en ce qu'il consiste à envoyer le résidu de la décanteuse, par la force de gravité, directement dans une cuve pour le produit concentré de l'évaporateur.

12. Utilisation du procédé suivant l'une des revendications 1 à 11 pour le traitement de l'acide phosphorique de bains d'électropolissage.

FIG 1

FIG 2

EP 0 195 214 B1

FIG 3

EP 0 195 214 B1